# EUROPEAN PATENT SPECIFICATION

(11) **EP 2 909 067 B1**
(45) Date of publication and mention of the grant of the patent: **29.11.2017**
(21) Application number: 13847070.3
(22) Date of filing: 25.09.2013
(51) Int. Cl.: B60T 10/02, B60T 1/087, F16D 57/04

(54) **RETARDER FOR BRAKING A MOTIVE POWER SOURCE, VEHICLE COMPRISING A RETARDER AND METHOD FOR ENGAGING AND DISENGAGING A RETARDER**
RETARDER ZUM BREMSEN EINES ANTRIEBSKRAFTQUELLE, FAHRZEUG MIT EINEM RETARDER UND VERFAHREN ZUM AN- UND ABSTELLEN EINES RETARDERS
RALENTISSEUR DESTINÉ À FREINER UNE SOURCE DE FORCE MOTRICE, VÉHICULE COMPRENANT UN RALENTISSEUR ET PROCÉDÉ D'EMBRAYAGE ET DE DÉBRAYAGE D'UN RALENTISSEUR

(30) Priority: 17.10.2012 SE 1251172
(43) Date of publication of application: 26.08.2015
(73) Proprietor: Scania CV AB, 151 87 Södertälje (SE)
(72) Inventor: RUDBERG, Arvid, S-126 37 Stockholm (SE); PÜSCHEL, Peter, S-892 50 Domsjö (SE); HANSTAD, Patrick, S-147 92 Grödinge (SE)
(74) Representative: Scania CV AB
(86) International application number: PCT/SE2013/051112
(87) International publication number: WO 2014/062111

(56) References cited:
- EP-A2- 1 123 847
- DE-A1- 10 321 279
- DE-A1- 19 833 893
- DE-A1-102004 048 121
- JP-A- H07 309 225
- SE-C2- 535 505
- US-A- 3 777 860
- US-A- 3 777 860
- US-A- 4 630 507
- US-A- 5 090 523

## Description

### BACKGROUND AND PRIOR ART

The present invention pertains to a retarder according to the preamble of patent claim 1, a vehicle, which comprises such a retarder according to the preamble to patent claim 7, and a method for the engagement and disengagement of a retarder according to the preamble to patent claim 8.

A retarder is used to brake a driving source, such as a vehicle. Often the retarder consists of an auxiliary brake, which complements the wheel brakes of the vehicle. Thus excessive wear of the wheel brakes is avoided. The retarder is engaged to the vehicle's gearbox or propeller shaft via a transmission. In order to reduce energy losses and thus reduce the vehicle's fuel consumption, the transmission is disengaged and the retarder is disengaged from the gearbox or the propeller shaft when the retarder is deactivated and does not have to brake the vehicle. The retarder shaft is then immobile, which entails that the oil pump, which is driven by the retarder shaft, is not able to fill the retarder oil circuit and the torus, which is formed by the rotor and stator of the retarder, with retarder oil.

The torus must be filled with retarder oil as quickly as possible when a braking effect from the retarder is sought. A slow filling initially entails a lack of a braking effect from the retarder, which entails an exaggerated use of the vehicle's wheel brakes which will be exposed to unnecessary wear.

In order to expedite the filling of the torus, the retarder may be equipped with an oil accumulator, which is filled with retarder oil and which, with the power from a piston impacted by hydraulic oil, leads the retarder oil via an accumulator circuit and a retarder oil circuit into the torus. The oil accumulator's contribution to quickly filling the torus is not sufficient, however, in all operating conditions and especially not in close connection to starting the vehicle, as the retarder oil in the retarder is then cold and viscous and has not yet filled the retarder oil circuit, since the retarder shaft and thus the oil pump on the retarder shaft have been immobile for a longer period. The engagement of the transmission on the gearbox or the propeller shaft may also be more difficult where the vehicle's combustion engine and gearbox have not achieved a predetermined working temperature. In the event that a clutch device, which is used for the engagement and disengagement of the transmission on the gearbox or the propeller shaft, comprises a synchronisation device with synchronisation rings, the engagement and disengagement of the transmission on the gearbox or propeller shaft is more difficult when the clutch device is cold. Thus the retarder's braking effect may be delayed or altogether absent.

The document US-A-3777860 shows a retarder for vehicles with a rotor and stator, at which the rotor is installed to connect and disconnect the vehicle's driving shaft with a clutch device which is controlled automatically depending on the activation of the vehicle brake.

### SUMMARY OF THE INVENTION

Despite prior art, there is a need to further develop a retarder which does not significantly encumber a driving source when it is deactivated, but which is activated for a very short period of time when it exerts a braking effect on the driving source.

The objective of the present invention is thus to provide a retarder with a short activation period.

Another objective of the invention is to provide a retarder which, when deactivated, exerts substantially zero braking torque on the driving source.

Another objective of the invention is to provide a retarder which reduces the fuel consumption of a vehicle.

Another objective of the invention is to provide a retarder with increased service life and reliability.

These objectives are achieved with a retarder of the type specified at the beginning, which is characterised by the features specified in the patent claim 1.

Such a retarder reduces the activation time significantly on engagement of the retarder. When the driving source is started, the retarder and the driving source are engaged, so that the retarder shaft drives the oil pump in order to fill the retarder oil circuit with retarder oil. A tachogenerator is arranged to measure the retarder shaft's revolutions in order to determine, based on knowledge about the capacity of the oil pump, when the retarder oil circuit is filled with retarder oil. Thus, the retarder is prepared for disengagement from the driving source in order to exert, when disengaged, substantially zero braking torque on the driving source and at a later stage to be engaged with a very short activation time. When the retarder oil circuit is filled, the retarder is disengaged from the driving source through the clutch.

When the retarder's associated clutch device operates at a predetermined working temperature, the retarder and the driving source are, according to one embodiment of the invention, engaged so that the retarder shaft drives the oil pump in order to fill the retarder oil circuit with retarder oil. When the clutch device for engagement and disengagement of the retarder shaft to and from the driving source, has achieved the predetermined working temperature, the retarder is disengaged from the driving source via the clutch device.

According to another embodiment of the invention, the retarder is permitted to be disengaged only if the conditions specified above are met and if the driving source emits a positive torque for the first time. When the driving source emits a positive torque for the first time, an indication that the retarder should not brake the driving source is thus obtained, so that the retarder may be disengaged.

The above objectives are achieved also with a vehicle of the type specified at the beginning, which is characterised by the features specified in the patent claim 7. The retarder permits a brief activation time and, when deactivated, exerts substantially zero braking torque on the vehicle in order thus to reduce the fuel consumption. The controlled engagement and disengagement of the retarder also entails that its service life and reliability increases.

The above objectives are achieved also with a method for the engagement and disengagement of a retarder specified at the beginning, which is characterised by the features specified in the patent claim 8.

Other advantages of the invention are set out in the detailed description below.

### BRIEF DESCRIPTION OF DRAWINGS

Below is a description, as an example, of preferred embodiments of the invention with reference to the enclosed drawings, on which:
Fig. 1 shows a schematic side view of a vehicle with a retarder according to the present invention,
Fig. 2 shows a cross section view of a retarder according to the present invention, and
Fig. 3 shows a flow chart of a method for the engagement and disengagement of a retarder according to the present invention.

### DETAILED DESCRIPTION OF A PREFERRED EMBODIMENT OF THE INVENTION

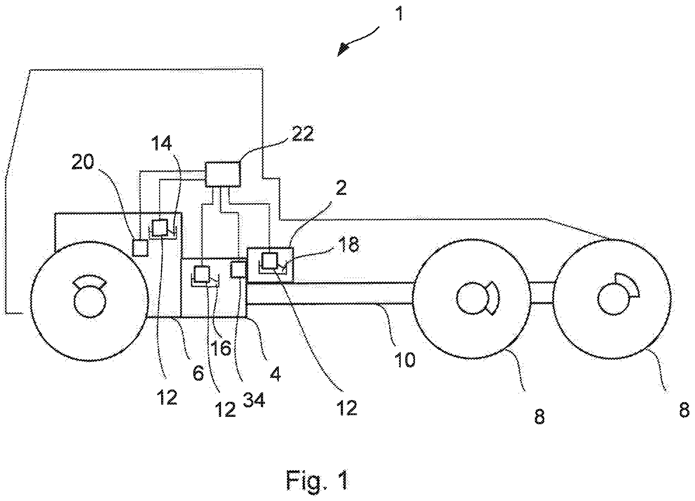

Fig. 1 shows a schematic side view of a vehicle 1, vehicle 1 which is equipped with a retarder 2 according to the present invention. The vehicle 1 is also equipped with a gearbox 4, which is connected to a combustion engine 6, which drives the driving wheels 8 of the vehicle 1 via the gearbox 4 and a propeller shaft 10. The combustion engine 6 is equipped with a temperature sensor 12 in order to measure the temperature of the coolant 14 of the combustion engine 6. The temperature sensor 12 may also be placed in the gearbox 4 or in the retarder 2, in order to measure the temperatures of the gearbox oil 16 and the retarder oil 18, respectively. A torque sensor 20 is arranged on the combustion engine 6 in order to detect the torque emitted from the combustion engine 6. The temperature sensor 12 and the torque sensor are engaged to a control device 22, which is arranged to control the retarder 2.

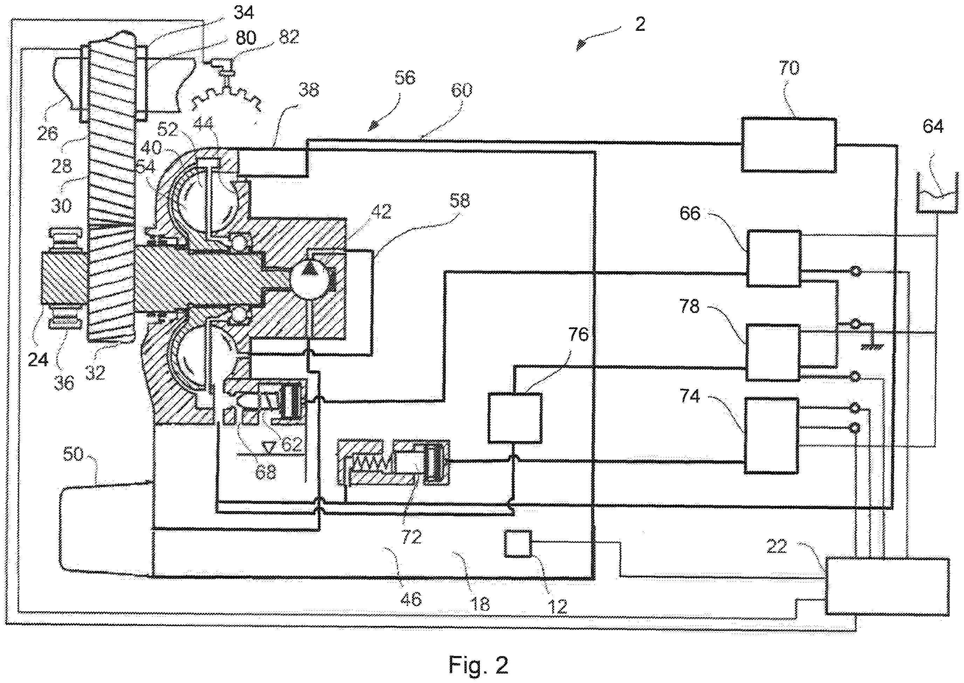

Fig. 2 shows a cross section view of a retarder 2 according to the present invention. The retarder 2 is equipped with a retarder shaft 24, which is engaged to an output shaft 26 of the gearbox 4 via a cog gear 28, comprising a first and second cogwheel 30, 32 engaged with each other. The first cogwheel 30 is arranged on the output shaft 26 of the gearbox 4 and the second cogwheel 32 is arranged on the retarder shaft 24. The first cogwheel 30 may be engaged and disengaged to the output shaft 26 of the gearbox 4 via a clutch device 34. Preferably, a gearing through the cog gear 28 in the ratio of 3:1 occurs, but other gearings are also possible, e.g. 1:1.

The retarder shaft 24 is preferably journalled in the gearbox and in a retarder housing 38 via a bearing 36. A rotor 40 and an oil pump 42 are arranged on the retarder shaft 24, which rotate at revolutions which are proportionate to the output shaft 26 of the gearbox 4. A stator 44 is connected to the retarder housing 38 and may therefore not rotate. The retarder housing 38 comprises an oil pump 46, which is filled with retarder oil 18 to a predetermined level. An oil filter 50 filters away any potential particles in the retarder oil 18.

The rotor 40 and the stator 44 jointly form a toroidal cavity, referred to as a torus 52, which is filled with retarder oil 18 when the retarder 2 is to exert a braking torque on the output shaft 26 of the gearbox 4 in order to brake the vehicle 1 to thus reduce the speed of the vehicle 1. The braking effect arises since the rotor 40 and the stator 44 are equipped with blades or shovels 54, which create an oil flow in the torus 52 when the rotor 40 rotates. The oil flow creates a reaction force jointly with the shovels 54 of the rotor 40 and the stator 44, which forms the braking effect. The greater the revolutions of the rotor 40, the greater the reaction force. On occasions when the retarder 2 does not have to brake the vehicle 1, the torus 52 is drained of retarder oil 18, which entails that the shovels 54 of the rotor 40 and the stator 44 will create an air flow in the torus 52. The air flow causes an undesirable reaction force on the retarder shaft 24, which generates a braking torque on output shaft 26 of the gearbox 4. The braking torque from the retarder 2 entails that the fuel consumption of the vehicle 1 increases when the combustion engine 6 of the vehicle 1 exerts a torque. The friction from the bearings and the oil pump 42 of the retarder shaft 24, which is driven by the retarder shaft 24, also exert a reaction force which causes an increased fuel consumption. For this reason the first cogwheel 30 may be disengaged from the output shaft 26 of the gearbox 4 when the retarder 2 is not used to brake the vehicle 1. Thus the fuel consumption of the vehicle 1 may be reduced.

Filling and draining of the torus 52 with retarder oil 18 takes place with a retarder oil circuit 56, which comprises a primary and a secondary oil circuit 58, 60. When the retarder 2 is activated in order to brake the vehicle 1, the first cogwheel 30 is engaged to the output shaft 26 of the gearbox 4. Thus, the retarder shaft 24 rotates, which causes the retarder shaft 24 to drive the oil pump 42, which pumps retarder oil 18 from the oil sump 46 via the oil filter 50. The oil pump 42 thus fills the primary oil circuit 58 with retarder oil 18. The primary oil circuit 58 is connected with the torus 52, which causes the torus 52 to be filled with retarder oil 18. In order for the torus 52 to be filled with retarder oil 18, however, a safety valve 62 must be closed, which occurs with the help of hydraulic oil 64, which is added via a first regulation valve 66. The safety valve 62 is also a drainage valve, which opens and closes a drainage channel 68, connecting the torus 52 and the oil sump 46. The drainage channel 68 is also engaged with the oil sump 46.

When the torus 52 is filled and the retarder 2 brakes the vehicle 1, the retarder oil 18 will be heated by the flow effects generated by the shovels 54 of the rotor 40 and the stator 44. The retarder oil 18 will thus be led further to the secondary circuit 60, which is engaged with an oil cooler 70. After the retarder oil 18 has passed the oil cooler 70, the retarder oil 18 is then led further through the secondary oil circuit 60, which is engaged downstream of the oil cooler 70 with the torus 52. Thus the secondary oil circuit 60 returns the retarder oil 18 into the torus 52. Downstream of the oil cooler 70, the secondary oil circuit 60 is connected with the oil sump 46 via a control valve 72, which is opened and closed by hydraulic oil 64 via a proportional valve 74. When the retarder 2 is engaged and brakes the vehicle 1, the control valve 72 is closed. Thus the retarder oil 18 in the secondary oil circuit 60 will be returned to the torus 52.

In order to expedite the filling of the torus 52 at low revolutions of the output shaft 26 of the gearbox 4, and thus low revolutions of the retarder shaft 24, when the oil pump 42 is unable to achieve a sufficiently large oil flow, an oil accumulator 76 may be activated with hydraulic oil 64 via a second regulation valve 78. The oil accumulator 76 is filled with retarder oil 18 which, with pressure from a piston impacted by the hydraulic oil 64, leads retarder oil 18 via an accumulator circuit and the secondary oil circuit 60 into the torus 52.

In order to drain the torus 52, the safety valve 62 and the control valve 72 are opened, so that the retarder oil 18 leaves the torus 52 via the drainage channel 68 and via the control valve 72.

The torus 52 must be filled with retarder oil 18 as quickly as possible when a braking effect from the retarder 2 is desired. A slow filling initially entails a lack of a braking effect from the retarder 2, which entails an exaggerated use of the wheel brakes of the vehicle 1, which will be exposed to unnecessary wear. The contribution of the oil accumulator 76 to quickly filling the torus 52 is not sufficient, however, in all operating conditions and especially not in close connection with starting the vehicle 1, as the retarder oil 18 in the retarder 2 is then cold and viscous and has not yet filled the retarder oil circuit 56, since the retarder shaft 24 and thus the oil pump 42 on the retarder shaft 24 have been immobile for a longer period. The engagement of the first cogwheel 30 on the output shaft 26 of the gearbox 4 may also be more difficult where the combustion engine 6 and gearbox 4 of the vehicle 1 have not achieved a predetermined working temperature. In the event the clutch device 34 for engagement and disengagement of the first cogwheel 30 on the output shaft 26 of the gearbox 4 comprises a synchronisation device with synchronisation rings 80, and if the clutch device 34 is lubricated by the gearbox oil 16 in the gearbox 4, the engagement of the first cogwheel 30 on the output shaft 26 of the gearbox 4 may be more difficult when the gearbox oil 16 is cold. Thus the braking effect of the retarder 2 may be delayed or altogether absent.

The present invention resolves the above stated problem by connecting the first cogwheel 30 to the output shaft 26 of the gearbox 4 when the vehicle is started. In this start-up phase of the vehicle 1 and the combustion engine 6 of the vehicle 1, the torus 52 and the primary and secondary oil circuits 58, 60 are drained of retarder oil 18, which means that the retarder 2 does not exert a full brake torque on the vehicle 1. However, the retarder 2 acts with an undesirable reaction force on the retarder shaft 24 when the torus 52 is drained, which results in an increased fuel consumption, as mentioned above. This entails that it is desirable to disconnect the first cogwheel 30 from the output shaft 26 of the gearbox 4 as soon as possible.

When the combustion engine 6 is started up, the control valve 72 is closed according to the invention, while the safety valve 62 is opened. Thus, the primary and the secondary oil circuits 58, 60 will be filled with retarder oil 18 by the oil pump 42 activated by the retarder shaft 24. However, torus 52 is not filled with retarder oil 18, since the safety valve 62 is open and the drainage channel 68 is thus also open. By determining the volume in the primary and secondary oil circuits 58, 60 and at the same time knowing the capacity of the oil pump 42 at different revolutions, the duration required to fill the primary and the secondary oil circuits 58, 60 may be calculated if the revolutions of the output shaft 26 of the gearbox 4 are measured, which is carried out with a tachogenerator 82. The retarder oil circuit 56 is deemed filled when sufficient time has lapsed with a flow exceeding a certain minimum level. The retarder oil flow is assessed based on the revolutions of the output shaft 26 of the gearbox 4, which at a certain speed is proportionate to the flow. The tachogenerator 82 is according to the embodiment displayed in Fig. 2 arranged on the output shaft 26 of the gearbox 4, but it is also possible to arrange the tachogenerator 82 on the retarder shaft 24 in order to directly measure the speed of the retarder shaft 24.

According to the invention, the temperature of the coolant 14 of the combustion engine 6, the temperature of the gearbox oil 16 in the gearbox 4 and/or the temperature of the retarder oil 18 in the retarder 2 are also measured. When one or all of these temperatures have reached a predetermined limit value, while it has been concluded at the measured time that the primary and the secondary oil circuits 58, 60 in the retarder have been filled with retarder oil 18, which is described above, the first cogwheel 30 will be disengaged from the output shaft 26 of the gearbox 4. In engagement with the temperature measuring, it is also possible to measure and take into consideration the temperature surrounding the vehicle 1. The temperature of the coolant 14 in the combustion engine 6, the temperature of the gearbox oil 16 in the gearbox 4 and/or the temperature of the retarder oil 18 in the retarder 2 are proportionate to the temperature of the clutch device 34 and give an indication of the temperature of the clutch device 34.

During the above disengaged state of the retarder 2, the retarder oil circuit 56 is filled with retarder oil 18 and the temperature of the clutch device 34 for the first cogwheel 30 has achieved a temperature which enables a quick and effective engagement of the first cogwheel 30 on the output shaft 26 of the gearbox 4.

According to one embodiment of the invention, the retarder 2 is permitted to be disengaged only provided that the conditions described above are met and if the combustion engine 6 emits a positive torque for the first time. If the combustion engine 6 of the vehicle 1 is started and its coolant 14 reaches the predetermined temperature and the time for the filled retarder oil circuit 56, the first cogwheel 30 will be disengaged from the output shaft 26 of the gearbox 4 when the combustion engine 6 emits a positive torque.

When the retarder 2 is to be activated to brake the vehicle 1, the clutch device 34 is thus activated, so that the first cogwheel 30 is connects to the output shaft 26 of the gearbox 4. At the same time, the safety valve 62 is closed, so that the draining channel 68 is closed. This entails that the torus 52 will quickly be filled with retarder oil 18, since the retarder shaft 24 rotates and drives the oil pump 42, which pumps retarder oil 18 from the oil sump 46 and further along to the retarder oil circuit 56. Since the retarder oil circuit 56 is already filled with retarder oil 18 before the retarder 2 is activated, the retarder oil 18 from the secondary oil circuit 60 will flow into torus 52 and fill this, which entails that the retarder 2 will exert a braking effect on the vehicle 1, as described above. According to the above, the retarder 2 is described as being arranged at a vehicle 1 in order to brake the vehicle 1, but it is also possible to use the retarder 2 according to the present invention for other applications. According to the above, the vehicle 1, combustion engine 6, gearbox 4 or propeller shaft 10 may constitute a driving source, which is connected directly or indirectly to the retarder 2. Other driving sources may, however, be connected to the retarder 2.

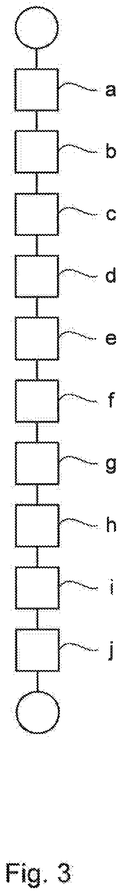

The method according to the present invention will be described below jointly with the flow chart in Fig. 3, the method of which comprises the steps to:
a) engage the retarder shaft 24 to the driving source 1, 4, 6, 10 with the clutch device 34;
b) with the oil pump 42 fill the retarder oil circuit 56 with retarder oil 18; and
c) with the clutch device 34 disengage the retarder shaft 24 from the driving source 1, 4, 6, 10 when the retarder oil circuit 56 is filled with retarder oil 18.

The method also comprises the additional step:
d) that a safety valve of the retarder 2 is controlled to an open position to open a draining channel 68 engaged to the torus 52 and thus to drain the torus 52 of retarder oil 18.

The method also comprises the additional step:
e) to measure the revolutions of the retarder shaft 24 in order to determine when the retarder oil circuit 56 is filled with retarder oil 18.

The method also comprises the additional step:
f) to determine the temperature of the clutch device 34 and to disengage the retarder shaft 24 from the driving source 1, 4, 6, 10 with the clutch device 34 when the temperature of the clutch device 34 has reached a predetermined temperature.

The method also comprises the additional step:
g) that the temperature of the clutch device 34 is determined by measuring the temperature of the driving source 1, 4, 6, 10.

The method also comprises the additional step:
h) to measure a torque emitted by the driving source 1, 4, 6, 10 and to disengage the retarder shaft 24 from the driving source 1, 4, 6, 10 with the clutch device 34 when the driving source 1, 4, 6, 10 emits a torque.

The method also comprises the additional steps:
i) after the disengagement of the retarder shaft 24 from the driving source 1, 4, 6, 10 to engage the retarder shaft 24 to the driving source 1, 4, 6, 10 with the clutch device 34; and
j) to control the safety valve 62 to a closed position in order to close the draining channel 68 engaged with the torus 52, so that the torus 52 is filled with retarder oil 18 from the retarder oil circuit 56 filled with retarder oil 18 and so that the retarder 2 acts with a braking torque on the driving source 1, 4, 6, 10.

The components and features specified above may within the framework of the invention be combined between different embodiments specified.

## Claims

1. Retarder to brake a driving source (1, 4, 6, 10), comprising
a retarder shaft (24), which is connected to a rotor (40) and an oil pump (42);
a stator (44), which jointly with the rotor (40) forms a torus (52) for the receipt of retarder oil (18);
a retarder oil circuit (56), which is connected to the oil pump (42) and the torus (52);
a clutch device (34) for engagement and disengagement of the retarder shaft (24) to and from the driving source (1, 4, 6, 10);
**characterised in that:**
a tachogenerator (82) is arranged to measure the retarder shaft's (24) revolutions in order to determine, based on knowledge about the capacity of the oil pump (42), when the retarder oil circuit (56) is filled with retarder oil (18), and
a control device (22) which is connected to a tachogenerator (82) and to the clutch device (34), the control device (22) which receives signals from the tachogenerator (82) regarding the revolutions of the retarder shaft (24) and which emits signals to the clutch device (34) to disengage the retarder shaft (24) from the driving source when the retarder oil circuit (56) is filled with retarder oil (18).

2. Retarder according to claim 1, **characterised in that** a temperature sensor (12) is connected to the control device (22), the temperature sensor (12) of which is arranged to measure the temperature of the clutch device (34) in order to disengage the retarder shaft (24) from the driving source (1, 4, 6, 10) with the clutch device (34) when the temperature of the clutch device (34) has achieved a predetermined temperature while it is noted at the same time that the retarder oil circuit (56) is filled with retarder oil.

3. Retarder according to claim 2, **characterised in that** the temperature sensor (12) is arranged on the driving source (1, 4, 6, 10) to measure the temperature of the driving source (1, 4, 6, 10), which is proportionate to the temperature of the clutch device (34).

4. Retarder according to any of the previous claims, **characterised in that** a safety valve (62) is connected to the control device (22), which, when the retarder (2) is acting with a brake torque on the driving source, controls the safety valve (62) to a closed position to close a draining channel (68) engaged with the torus (52), so that the torus (52) is filled with retarder oil (18) from the retarder oil circuit (56) filled with retarder oil (18).

5. Retarder according to any of the previous claims, **characterised in that** the driving source is a combustion engine (6).

6. Retarder according to claim 5, **characterised in that** a torque sensor (20), which detects the torque emitted by the combustion engine (6), is connected to the control device (22) and that the control device (22) emits signals to the clutch device (34) to disengage the retarder shaft (24) when the additional condition that the torque sensor (20) has measured a positively emitted torque is met.

7. Vehicle (1), **characterised in that** it comprises a retarder (2) according to any of claims 1-6.

8. Method for engagement and disengagement of a retarder (2), comprising
a retarder shaft (24), which is connected to a rotor (40) and an oil pump (42);
a stator (44), which jointly with the rotor (40) forms a torus (52) for the receipt of retarder oil (18);
a retarder oil circuit (56), which is connected to the oil pump (42) and the torus (52);
a clutch device (34) for engagement and disengagement of the retarder shaft (24) to and from the driving source (1, 4, 6, 10);
**characterised by** the steps to:
a) engaging the retarder shaft (24) to the driving source (1, 4, 6, 10) with the clutch device (34);
b) with the oil pump (42) fill the retarder oil circuit (56) with retarder oil (18); and
c) with the clutch device (34) disengaging the retarder shaft (24) from the driving source (1, 4, 6, 10) when the retarder oil circuit (56) is filled with retarder oil (18).

9. Method according to claim 8, **characterised by** the additional step:
that a safety valve (62) of the retarder (2) is controlled to an open position to open a draining channel (68) connected to the torus (52) and thus to drain the torus (52) of retarder oil (18).

10. Method according to any of claims 8 or 9, **characterised by** the additional step:
to measure the revolutions of the retarder shaft (24) in order to determine when the retarder oil circuit (56) is filled with retarder oil (18).

11. Method according to any of claims 8 - 10, **characterised by** the additional step:
to determine the temperature of the clutch device (34) and to disengage the retarder shaft (24) from the driving source (1, 4, 6, 10) with the clutch device (34) when the temperature of the clutch device (34) has reached a predetermined temperature.

12. Method according to claim 11, **characterised by** the additional step:
that the temperature of the clutch device (34) is determined by measuring the temperature of the driving source (1, 4, 6, 10).

13. Method according to any of claims 8 -12, **characterised by** the additional step:
to measure a torque emitted by the driving source (1, 4, 6, 10) and to disengage the retarder shaft (24) from the driving source (1, 4, 6, 10) with the clutch device (34) when the driving source (1, 4, 6, 10) emits a torque.

14. Method according to any of claims 8-13, **characterised by** the additional steps:
after the disengagement of the retarder shaft (24) from the driving source (1, 4, 6, 10) to engage the retarder shaft (24) to the driving source (1, 4, 6, 10) with the clutch device (34); and
to control the safety valve (62) to a closed position in order to close the draining channel (68) conencted with the torus (52), so that the torus (52) is filled with retarder oil (18) from the retarder oil circuit (18) filled with retarder oil(56) and so that the retarder (2) acts with a braking torque on the driving source (1, 4, 6, 10).

## Patentansprüche

1. Retarder zum Bremsen einer Antriebsquelle (1, 4, 6, 10), umfassend
eine Retarderwelle (24), welche mit einem Rotor (40) und einer Ölpumpe (42) verbunden ist;
einen Stator (44), welcher gemeinsam mit dem Rotor (40) einen Torus (52) zur Aufnahme von Retarderöl (18) bildet;
einen Retarderöl-Kreislauf (56), welcher mit der Ölpumpe (42) und dem Torus (52) verbunden ist;
eine Kupplungsvorrichtung (34) zum Verbinden der Retarderwelle (24) mit und zum Trennen der Retarderwelle (24) von der Antriebsquelle (1, 4, 6, 10); **gekennzeichnet durch**:
einen Tachogenerator (82), welcher zum Messen der Umdrehungen der Retarderwelle (24) angeordnet ist, um basierend auf Kenntnis der Kapazität der Ölpumpe (42) zu bestimmen, wann der Retarderöl-Kreislauf (56) mit Retarderöl (18) gefüllt ist, und
eine Steuervorrichtung (22), welche mit dem Tachogenerator (82) und der Kupplungsvorrichtung (34) verbunden ist, wobei die Steuervorrichtung (22) Signale von dem Tachogenerator (82) hinsichtlich der Umdrehungen der Retarderwelle (24) empfängt und Signale an die Kupplungsvorrichtung (34) zum Trennen der Retarderwelle (24) von der Antriebsquelle abgibt, wenn der Retarderöl-Kreislauf (56) mit Retarderöl (18) gefüllt ist.

2. Retarder nach Anspruch 1, **dadurch gekennzeichnet, dass** ein Temperatursensor (12) mit der Steuervorrichtung (22) verbunden ist, wobei der Temperatursensor (12) zum Messen der Temperatur der Kupplungsvorrichtung (34) angeordnet ist, um die Retarderwelle (24) mittels der Kupplungsvorrichtung (34) von der Antriebsquelle (1, 4, 6, 10) zu trennen, wenn die Temperatur der Kupplungsvorrichtung (34) eine vorbestimmte Temperatur erreicht hat und zu derselben Zeit festgestellt wird, dass der Retarderöl-Kreislauf (56) mit Retarderöl gefüllt ist.

3. Retarder nach Anspruch 2, **dadurch gekennzeichnet, dass** der Temperatursensor (12) an der Antriebsquelle (1, 4, 6, 10) angeordnet ist, um die Temperatur der Antriebsquelle (1, 4, 6, 10) zu messen, welche proportional zur Temperatur der Kupplungsvorrichtung (34) ist.

4. Retarder nach einem der vorhergehenden Ansprüche, **dadurch gekennzeichnet, dass** ein Sicherheitsventil (62) mit der Steuervorrichtung (22) verbunden ist, wobei dann, wenn der Retarder (2) mit einem Bremsmoment auf die Antriebsquelle wirkt, die Steuervorrichtung (22) das Sicherheitsventil (62) in eine geschlossene Position zum Schließen eines mit dem Torus (52) verbundenen Ablaufkanals (68) steuert, sodass der Torus (52) mit Retarderöl (18) aus dem mit Retarderöl (18) gefüllten Retarderöl-Kreislauf (56) gefüllt wird.

5. Retarder nach einem der vorhergehenden Ansprüche, **dadurch gekennzeichnet, dass** die Antriebsquelle ein Verbrennungsmotor (6) ist.

6. Retarder nach Anspruch 5, **dadurch gekennzeichnet, dass** ein Drehmomentsensor (20), welcher das vom Verbrennungsmotor (6) abgegebene Drehmoment detektiert, mit der Steuervorrichtung (22) verbunden ist und dass die Steuervorrichtung (22) Signale zum Trennen der Retarderwelle (24) an die Kupplungsvorrichtung (34) abgibt, wenn die zusätzliche Bedingung erfüllt ist, dass der Drehmomentsensor (20) ein positives abgegebenes Drehmoment gemessen hat.

7. Fahrzeug (1), **dadurch gekennzeichnet, dass** es einen Retarder (2) nach einem der Ansprüche 1-6 umfasst.

8. Verfahren zum Verbinden und zum Trennen eines Retarders (2), umfassend eine Retarderwelle (24), welche mit einem Rotor (40) und einer Ölpumpe (42) verbunden ist;
einen Stator (44), welcher gemeinsam mit dem Rotor (40) einen Torus (52) zur Aufnahme von Retarderöl (18) bildet;
einen Retarderöl-Kreislauf (56), welcher mit der Ölpumpe (42) und dem Torus (52) verbunden ist;
eine Kupplungsvorrichtung (34) zum Verbinden der Retarderwelle (24) mit und zum Trennen der Retarderwelle (24) von der Antriebsquelle (1, 4, 6, 10);
das Verfahren **gekennzeichnet durch** die Schritte:
a) Verbinden der Retarderwelle (24) mit der Antriebsquelle (1, 4, 6, 10) mittels der Kupplungsvorrichtung (34);
b) Füllen des Retarderöl-Kreislaufs (56) mit Retarderöl (18) mittels der Ölpumpe (42); und
c) Trennen der Retarderwelle (24) von der Antriebsquelle (1, 4, 6, 10) mittels der Kupplungsvorrichtung (34), wenn der Retarderöl-Kreislauf (56) mit Retarderöl (18) gefüllt ist.

9. Verfahren nach Anspruch 8, **gekennzeichnet durch** den zusätzlichen Schritt, dass ein Sicherheitsventil (62) des Retarders (2) in eine offene Position gesteuert wird zum Öffnen eines mit dem Torus (52) verbundenen Ablaufkanals (68) und somit zum Ablaufen lassen von Retarderöl (18) aus dem Torus (52).

10. Verfahren nach einem der Ansprüche 8 oder 9, **gekennzeichnet durch** den zusätzlichen Schritt:
Messen der Umdrehungen der Retarderwelle (24) zum Bestimmen, wann der Retarderöl-Kreislauf (56) mit Retarderöl (18) gefüllt ist.

11. Verfahren nach einem der Ansprüche 8-10, **gekennzeichnet durch** den zusätzlichen Schritt:
Bestimmen der Temperatur der Kupplungsvorrichtung (34) und Trennen der Retarderwelle (24) von der Antriebsquelle (1, 4, 6, 10) mittels der Kupplungsvorrichtung (34), wenn die Temperatur der Kupplungsvorrichtung (34) eine vorbestimmte Temperatur erreicht hat.

12. Verfahren nach Anspruch 11, **gekennzeichnet durch** den zusätzlichen Schritt, dass die Temperatur der Kupplungsvorrichtung (34) durch Messen der Temperatur der Antriebsquelle (1, 4, 6, 10) bestimmt wird.

13. Verfahren nach einem der Ansprüche 8-12, **gekennzeichnet durch** den zusätzlichen Schritt:
Messen eines von der Antriebsquelle (1, 4, 6, 10) abgegebenen Drehmoments und Trennen der Retarderwelle (24) von der Antriebsquelle (1, 4, 6, 10) mittels der Kupplungsvorrichtung (34), wenn die Antriebsquelle (1, 4, 6, 10) ein Drehmoment abgibt.

14. Verfahren nach einem der Ansprüche 8-13, **gekennzeichnet durch** die zusätzlichen Schritte:
Verbinden der Retarderwelle (24) mit der Antriebsquelle (1, 4, 6, 10) mittels der Kupplungsvorrichtung (34) nach dem Trennen der Retarderwelle (24) von der Antriebsquelle (1, 4, 6, 10); und
Steuern des Sicherheitsventils (62) in eine geschlossene Position zum Schließen des mit dem Torus (52) verbundenen Ablaufkanals (68), sodass der Torus (52) mit Retarderöl (18) aus dem mit Retarderöl (56) gefüllten Retarderöl-Kreislauf (18) gefüllt wird und sodass der Retarder (2) mit einem Bremsmoment auf die Antriebsquelle (1, 4, 6, 10) wirkt.

## Revendications

1. Ralentisseur pour freiner une source d'entraînement (1, 4, 6, 10), comprenant :
un arbre de ralentisseur (24), qui est relié à un rotor (40) et à une pompe à huile (42) ;
un stator (44), qui conjointement avec le rotor (40) forme un tore (52) pour la réception d'huile de ralentisseur (18) ;
un circuit d'huile de ralentisseur (56), qui est relié à la pompe à huile (42) et au tore (52) ;
un dispositif d'embrayage (34) pour la mise en prise et le désengagement de l'arbre de ralentisseur (24) avec et à partir de la source d'entraînement (1, 4, 6, 10) ;
**caractérisé par** :
un générateur tachymétrique (82) agencé de façon à mesurer les rotations de l'arbre de ralentisseur (24) afin de déterminer, en fonction de la connaissance de la capacité de la pompe à huile (42), le moment où le circuit d'huile de ralentisseur (56) est rempli par de l'huile de ralentisseur (18), et
un dispositif de commande (22) qui est connecté à un générateur tachymétrique (82) et au dispositif d'embrayage (34), le dispositif de commande (22) recevant des signaux à partir du générateur tachymétrique (82) concernant les rotations de l'arbre de ralentisseur (24) et émettant des signaux vers le dispositif d'embrayage (34) de façon à désengager l'arbre de ralentisseur (24) de la source d'entraînement lorsque le circuit d'huile de ralentisseur (56) est rempli par de l'huile de ralentisseur (18).

2. Ralentisseur selon la revendication 1, **caractérisé en ce qu'**un capteur de température (12) est connecté au dispositif de commande (22), le capteur de température (12) étant agencé de façon à mesurer la température du dispositif d'embrayage (34) afin de désengager l'arbre de ralentisseur (24) de la source d'entraînement (1, 4, 6, 10) avec le dispositif d'embrayage (34) lorsque la température du dispositif d'embrayage (34) a atteint une température prédéterminée alors qu'il est noté en même temps que le circuit d'huile de ralentisseur (56) est rempli par de l'huile de ralentisseur.

3. Ralentisseur selon la revendication 2, **caractérisé en ce que** le capteur de température (12) est disposé sur la source d'entraînement (1, 4, 6, 10) de façon à mesurer la température de la source d'entraînement (1, 4, 6, 10), qui est proportionnelle à la température du dispositif d'embrayage (34).

4. Ralentisseur selon l'une quelconque des revendications précédentes, **caractérisé en ce qu'**une soupape de sécurité (62) est connectée au dispositif de commande (22), qui, lorsque le ralentisseur (2) agit avec un couple de freinage sur la source d'entraînement, commande la soupape de sécurité (62) dans une position fermée de façon à fermer un canal de drainage (68) venant en prise avec le tore (52), de telle sorte que le tore (52) soit rempli par de l'huile de ralentisseur (18) à partir du circuit d'huile de ralentisseur (56) rempli par de l'huile de ralentisseur (18).

5. Ralentisseur selon l'une quelconque des revendications précédentes, **caractérisé en ce que** la source d'entraînement est un moteur à combustion (6).

6. Ralentisseur selon la revendication 5, **caractérisé en ce qu'**un capteur de couple (20), qui détecte le couple émis par le moteur à combustion (6), est connecté au dispositif de commande (22), et **en ce que** le dispositif de commande (22) émet des signaux vers le dispositif d'embrayage (34) de façon à désengager l'arbre de ralentisseur (24) lorsque la condition additionnelle qui est que le capteur de couple (20) a mesuré un couple émis de façon positive est satisfaite.

7. Véhicule (1), **caractérisé en ce qu'**il comprend un ralentisseur (2) selon l'une quelconque des revendications 1 à 6.

8. Procédé pour la mise en prise et le désengagement d'un ralentisseur (2) comprenant :
un arbre de ralentisseur (24), qui est relié à un rotor (40) et à une pompe à huile (42) ;
un stator (44), qui conjointement avec le rotor (40) forme un tore (52) pour la réception d'huile de ralentisseur (18) ;
un circuit d'huile de ralentisseur (56), qui est relié à la pompe à huile (42) et au tore (52) ;
un dispositif d'embrayage (34) pour la mise en prise et le désengagement de l'arbre de ralentisseur (24) avec et à partir de la source d'entraînement (1, 4, 6, 10) ;
**caractérisé par** les étapes consistant à :
a) mettre en prise l'arbre de ralentisseur (24) avec la source d'entraînement (1, 4, 6, 10) avec le dispositif d'embrayage (34) ;
b) avec la pompe à huile (42), remplir le circuit d'huile de ralentisseur (56) avec de l'huile de ralentisseur (18) ; et
c) avec le dispositif d'embrayage (34), désengager l'arbre de ralentisseur (24) de la source d'entraînement (1, 4, 6, 10) lorsque le circuit d'huile de ralentisseur (56) est rempli par de l'huile de ralentisseur (18).

9. Procédé selon la revendication 8, **caractérisé par** l'étape additionnelle qui est que :
une soupape de sécurité (62) du ralentisseur (2) est commandée dans une position ouverte de façon à ouvrir un canal de drainage (68) relié au tore (52) de façon à drainer ainsi le tore (52) de l'huile de ralentisseur (18).

10. Procédé selon l'une quelconque des revendications 8 ou 9, **caractérisé par** l'étape additionnelle consistant à :
mesurer les rotations de l'arbre de ralentisseur (24) de façon à déterminer le moment où le circuit d'huile de ralentisseur (56) est rempli par de l'huile de ralentisseur (18).

11. Procédé selon l'une quelconque des revendications 8 à 10, **caractérisé par** l'étape additionnelle consistant à :
déterminer la température du dispositif d'embrayage (34) et désengager l'arbre de ralentisseur (24) de la source d'entraînement (1, 4, 6, 10) avec le dispositif d'embrayage (34) lorsque la température du dispositif d'embrayage (34) a atteint une température prédéterminée.

12. Procédé selon la revendication 11, **caractérisé par** l'étape additionnelle qui est que :
la température du dispositif d'embrayage (34) est déterminée par la mesure de la température de la source d'entraînement (1, 4, 6, 10).

13. Procédé selon l'une quelconque des revendications 8 à 12, **caractérisé par** l'étape additionnelle consistant à :
mesurer un couple émis par la source d'entraînement (1, 4, 6, 10) et désengager l'arbre de ralentisseur (24) de la source d'entraînement (1, 4, 6, 10) avec le dispositif d'embrayage (34) lorsque la source d'entraînement (1, 4, 6, 10) émet un couple.

14. Procédé selon l'une quelconque des revendications 8 à 13, **caractérisé par** les étapes additionnelles consistant à :
après le désengagement de l'arbre de ralentisseur (24) de la source d'entraînement (1, 4, 6, 10), mettre en prise l'arbre de ralentisseur (24) avec la source d'entraînement (1, 4, 6, 10) avec le dispositif d'embrayage (34) ; et commander la soupape de sécurité (62) dans une position fermée de façon à fermer le canal de drainage (68) relié au tore (52), de telle sorte que le tore (52) soit rempli par de l'huile de ralentisseur (18) à partir du circuit d'huile de ralentisseur (18) rempli par de l'huile de ralentisseur (56), et que le ralentisseur (2) agisse avec un couple de freinage sur la source d'entraînement (1, 4, 6, 10).
